# EUROPEAN PATENT SPECIFICATION

(11) **EP 0 293 888 B1**
(45) Date of publication and mention of the grant of the patent: **01.09.1993**
(21) Application number: 88108824.9
(22) Date of filing: 01.06.1988
(51) Int. Cl.: G06K 7/06, G06K 13/08

(54) **IC card reader**
Chip-Kartenleser
Lecteur de carte à puce

(30) Priority: 01.06.1987 JP 138746/87
(43) Date of publication of application: 07.12.1988
(73) Proprietor: OMRON TATEISI ELECTRONICS CO., Kyoto 616 (JP)
(72) Inventor: Mita, Katsuya Omron Tateisi Electronics Co., Nagaokakyo-City Kyoto 617 (JP)
(74) Representative: WILHELMS, KILIAN & PARTNER Patentanwälte

(56) References cited:
- FR-A- 2 477 303
- FR-A- 2 578 072
- GB-A- 2 124 420

## Description

The present invention relates to an IC card reader having a plurality of contact members adapted to be come into contact with a plurality of contacts of an IC (Integrated Circuit) card and for transmitting and receiving data to and from a circuit in the IC card. In general, most of IC cards include a CPU (Central Processing Unit) or MPU (Micro-processing Unit or Micro-processor) and a memory (and a battery, if necessary) in a card-shaped supporting medium. The IC card applicable to the IC card reader of the present invention also incorporates an IC card including only a CPU or MPU, an IC card including only a memory, an IC card including an electronic circuit other than the CPU or MPU, and the like.

IC cards are being highlighted as excellent cards in place of magnetic cards and as useful cards adapted to new application uses which cannot be realized by the conventional magnetic cards or the like. The IC card has exposed contacts on the surface of the card. On the other hand, an IC card reader has contact members. When the IC card is inserted into the IC card reader, the contact members are come into contact with the contacts of the IC card, and the electronic circuit in the IC card is electrically connected with the electronic circuit in the IC card reader, so that data, commands, control signals, and the like can be transmitted and received between both electronic circuits.

In the IC card reader, since contact members are come into contact with contacts of the IC card and electrically connected therewith, when the IC card inserted into the IC card reader unexpectedly moves, the contacting state of the contact members and contacts are released and there occurs a case where the data cannot be properly communicated. Therefore, the inserting position of the IC card needs to be fixed.

On the other hand, it is also necessary to detect that the IC card is inserted in a predetermined position of the IC card reader in order to start data communication between the IC card reader and IC card. If the card set detecting means and the card fixing means are differently provided, problems of an increase in numbers of parts and assembling steps and an increase in cost will rise.

An IC card reader according to the preamble of claim 1 is known from GB-A-2 124 420.

It is an object of the present invention to solve the above problem by making the mechanism to fix the inserted IC card to a predetermined position to be provided with switching function to detect the insertion of the IC card to the predetermined position.

The invention is as defined in claim 1.

According to the present invention, when an IC card is inserted and reaches a predetermined position in the passageway of the IC card reader, the IC card is inserted under the first spring member and the first spring member is ascended, the elastic recovery force due to the elevation of the first spring member acts as a depressing force of the IC card and the IC card is fixed to the predetermined position against the vibration and shock and at the same time, the first spring member is come into contact with the second spring member arranged just over the first spring member, and the electric conduction is performed therebetween, so that the detection signal indicative of the completion of the insertion of the IC card to the predetermined position is output.

Therefore, according to the invention, the following effects are obtained.

Since the card fixing and card position detection can be accomplished by the same composing members, the IC card reader structure can be easily miniaturized, light weighted, and reduced in cost. The number of parts and the number of assembling steps can be reduced. Further, since the simple spring members are used, the above advantage can be further enhanced.

The above and other objects and features of the present invention will become apparent from the following detailed description and the appended claims with reference to the accompanying drawings, in which;
Fig. 1 is a plan view of a whole IC card reader in an embodiment of the invention and illustrates a state in which an IC card was inserted to a predetermined position;
Fig. 2 is a side elevational view of the IC card reader and illustrates a state in which a slide member and a contact member supporting member are omitted;
Fig. 3 is a front view of the IC card reader and shows a state in which the slide member and the contact member supporting member are omitted;
Fig. 4 is a cross sectional view taken along the line IV-IV in Fig. 1;
Fig. 5 is a cross sectional view taken along the line V-V in Fig. 1,
Fig. 6 is a cross sectional view taken along the line VI-VI in Fig. 1;
Fig. 7 is a cross sectional view taken along the line VII-VII in Fig. 1;
Fig. 8 is a cross sectional view taken along the line VIII-VIII in Fig. 1;
Fig. 9 is an enlarged diagram of the bottom surface of the contact member supporting member;
Fig. 10 is an enlarged diagram of a part of an IC card;
Figs. 11 to 13 are cross sectional views taken along the line XI-XI in Fig. 1 which are illustrated in accordance with the order of the operations;
Figs. 14 to 16 show another embodiment of the invention;

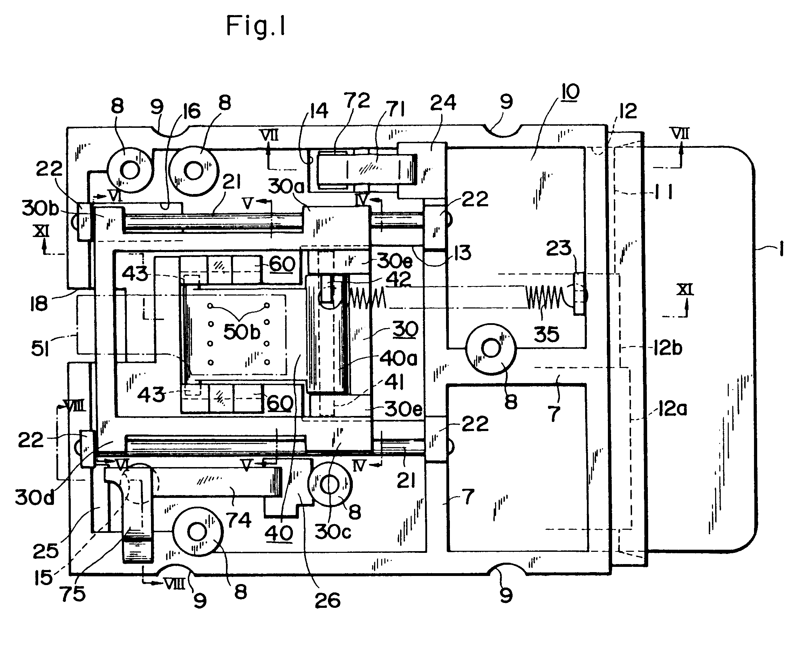

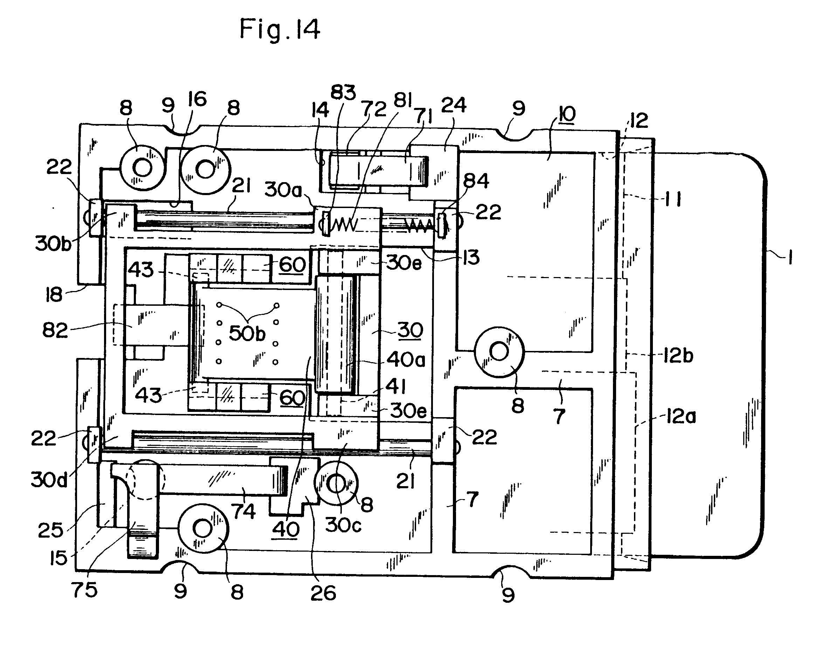

Fig. 14 is a plan view corresponding to Fig. 1; and

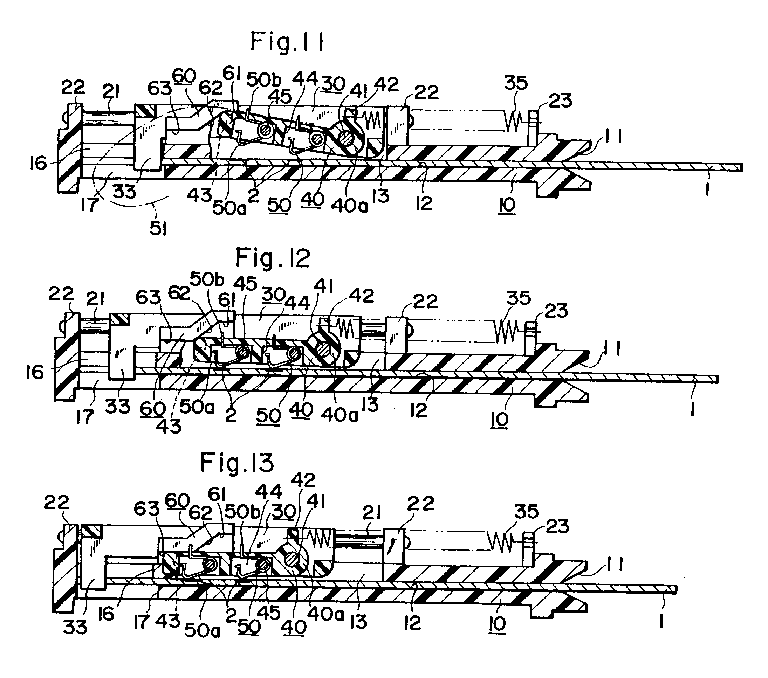

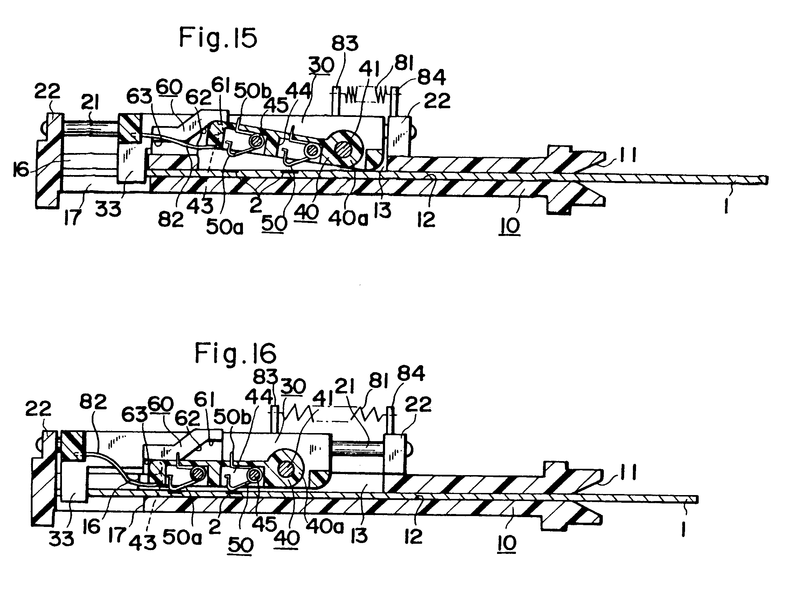

Figs. 15 and 16 are cross sectional views corresponding to Figs. 11 and 13.

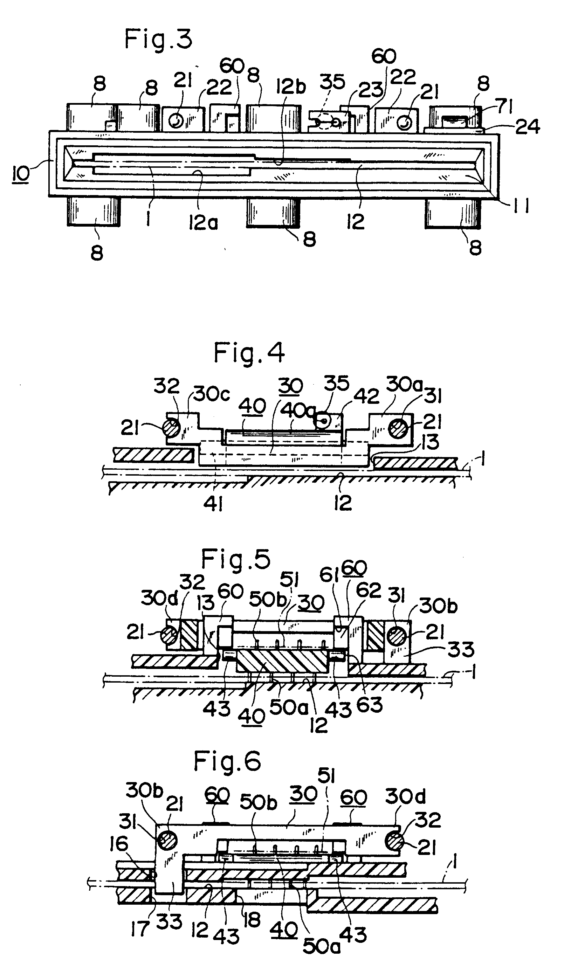

Referring now to Figs. 1 to 3, a frame 10 of an IC card reader is formed like a flat box shape whose whole surface is almost covered excluding only an inserting port 11. The frame 10 is made of a synthetic resin. Practically speaking, the frame 10 consists of an upper half body and a lower half body. These two bodies are coupled by proper fixing or bonding means, thereby constituting an integrated frame 10. An IC card passageway 12 extending laterally from side to side of the frame 10 is formed in the frame 10 in the range from the inserting port 11 to the end portion. As clearly illustrated in Fig. 3, a space portion 12a having a height larger than a normal height of the gap, which corresponds to the thickness of the IC card 1, is formed in the passageway 12 in order to prevent the collision or scratch with the emboss formed on an IC card 1. Another space portion 12b having a height lower than the height of the portion 12a and larger than the normal height of the gap is also formed in the passageway 12 in order to likewise prevent the collision with a plurality of contacts 2 of the IC card 1 (in some of the IC cards, the contacts are slightly projected from the surface of the IC card). By forming the large space portions 12a and 12b in the passageway 12 in this manner, the IC card 1 can be smoothly inserted into the IC card reader without damaging the emboss and contacts of the IC card due to the collision with the inner surface of the passageway 12. The height of the other portions of the passageway 12 and the width of the whole passageway 12 are set so as to be substantially equal to thickness and width of the IC card 1, thereby guiding the IC card 1 so as to be smoothly inserted and ejected. The inserting port 11 has a tapered form which outwardly extends so that the IC card 1 can be easily inserted.

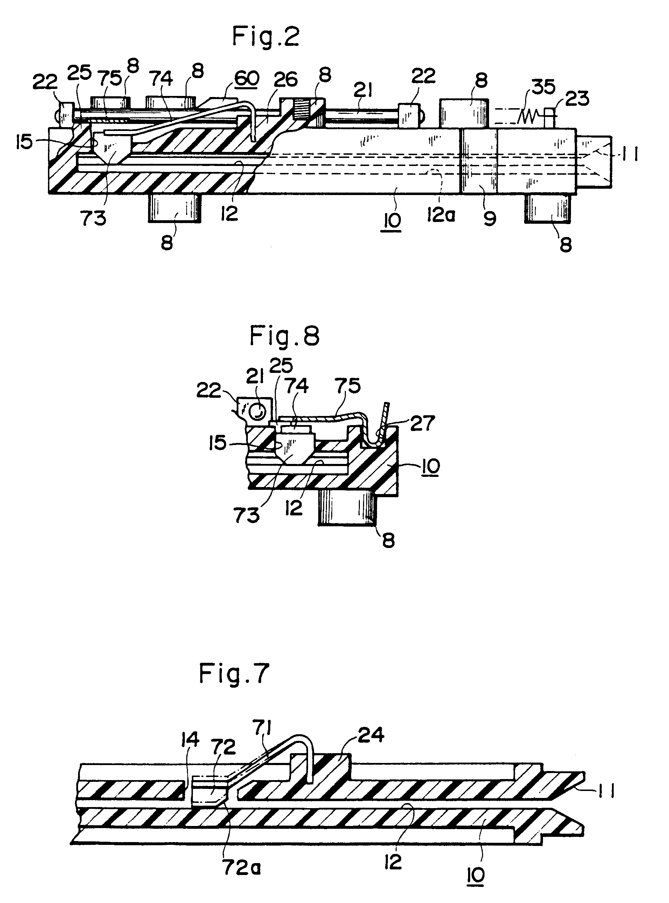

A plurality of bosses 8 to fix the frame 10 (i.e., the IC card reader) to the main body of an apparatus are formed at proper positions on both of the upper and lower plates of the frame 10 (in this case, the terms "upper" and "lower" are used when looking at Figs. 2 and 3 as the reference diagrams). Screw holes are formed in the bosses 8. The frame 10 is fixed by use of screws. In addition, a plurality of arc-shaped concave portions 9 for positioning are formed on both side surfaces of the frame 10. On the other hand, openings or holes or notches 13 to 18 are formed in the upper and/or lower plates of the frame 10 and these will be explained in detail hereinlater. Reference numeral 7 denotes reinforcing ribs which are respectively formed on both upper and lower plates of the frame 10.

Referring now to Figs. 4 to 6 and Figs. 11 to 13 in addition to Figs. 1 to 3, the opening 13 is formed in almost the central portion of the upper surface of the frame 10. Guide rods 21 are arranged in parallel at slightly upper positions on both sides of the opening 13. The guide rods 21 are respectively fixed at both ends by projecting shoe portions 22 formed integrally with the frame 10. The guide rods 21 extend in the inserting and ejecting directions of the IC card 1.

A slide member 30 is supported to the guide rods 21 so as to be movable in the longitudinal direction of the guide rods 21. The slide member 30 is formed like an almost rectangular frame when it is seen as a plan view. Bearing portions 30a, 30b, 30c and 30d are provided at four corners of the slide member 30, respectively. The slide member 30 is also made of a synthetic resin. Holes 31 are formed in the bearing portions 30a and 30b. One of the guide rods 21 is slidably disposed in the holes 31. Holes 32 which are partially cut away are formed in the bearing portions 30c and 30d. The other guide rod 21 is slidably disposed in the holes 32. Namely, the bearing portions 30c and 30d slidably embrace the other guide rod 21.

Assuming that the end of the frame 10 having the inserting port 11 is the front, a receiving projecting portion 33 downwardly extends from one of the bearing portions 30b on the rear side. The receiving projecting portion 33 passes through the opening 16 formed in the upper plate of the frame 10 and vertically traverses the passageway 12 and further extends into the hole 17 formed in the lower plate of the frame 10.

When the IC card 1 is inserted from the inserting port 11 into the passageway 12, the front edge abuts on the receiving projecting portion 33. By further inserting the IC card, the slide member 30 moves toward the backward portion of the frame 10 against the force of a return spring 35, which will be explained hereinlater. The guide of the slide member 30 is fundamentally accomplished by the bearing portions 30a and 30b on one side and by one of the guide rods 21 penetrating these bearing portions. Since the receiving projecting portion 33 arranged on the side of the bearing portions 30a and 30b, the slide member 30 is smoothly slided. The other bearing portions 30c and 30d loosely support the other guide rod 21 and assist the guide of the slide member 30 and also stabilize the position of the slide member 30. Even if the IC card 1 to be inserted is slightly inclined in the inserting direction, the slide member 30 is come into contact with the IC card at one point (namely, one receiving projecting portion 33), so that the inclination of the IC card 1 will not exert a bad influence on the slide member 30.

A contact member supporting member 40 is swingably supported to the slide member 30. Namely, a fulcrum portion 40a is provided in the front portion of the supporting member 40. An axis 41 penetrates the inside of the fulcrum portion 40a and is fixed. On the other hand, tearing portions 30e are formed in the inside portions of the bearing portions 30a and 30c of the slide member 30. The portions projecting to both sides of the axis 41 are rotatably supported by the bearing portions 30e. The supporting member 40 is also made of a synthetic resin.

A spring shoe 42 is integrally formed on the fulcrum portion 40a and extends toward the almost upper portion. On the other hand, a spring shoe 23 is also integrally formed in the front upper portion of the frame 10. The coil spring (tension spring) 35 is attached between the spring shoes 42 and 23. The spring 35 returns the slide member 30 to its standby position (idle position) and also returns the contact member supporting member 40 to its standby position.

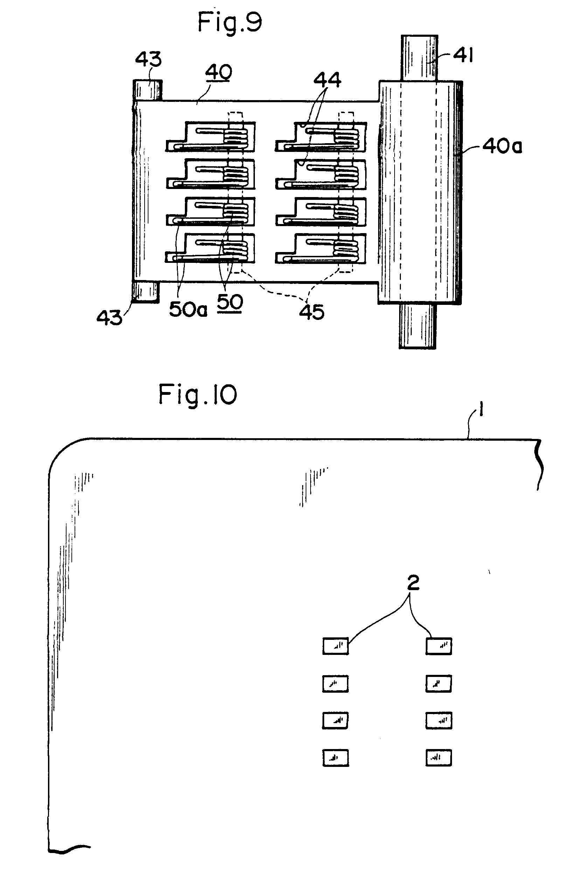

Fig. 9 enlargedly illustrates the bottom surface of the supporting member 40. In this embodiment, eight concave portions 44 are formed in the bottom surface of the supporting member 40. Contact members 50 are fitted into the concave portions 44. The axis 45 is fixed in the concave portions 44. Each contact member 50 is a kind of snap type spring. The coil portion of the contact member 50 is wound around the axis 45. One end of the coil portion downwardly extends to form a contact portion 50a and the other end penetrates the supporting member 40 and is projected over the upper surface, thereby forming a connecting portion 50b.

Fig. 10 enlargedly shows the portion where the contacts 2 of the IC card 1 are formed. In this embodiment, eight contacts 2 are formed on the IC card 1. Eight contact members 50 are provided for the supporting member 40 so as to have substantially the same arrangement with that of the eight contacts 2. The IC card reader is designed in a manner such that each contact member 50 is located just over each corresponding contact 2 of the IC card 1 when the IC card 1 is inserted into the passageway 12 of the IC card reader and its front edge just abuts on the receiving projecting portion 33.

The connecting portions 50b of the contact members 50 projecting over the supporting member 40 are respectively connected to a wiring pattern of a flexible printed circuit board 51 to be led to the outside. A part of the printed circuit board 51 is fixed onto the supporting member 40 and passes through the notch 18 formed in the rear portion of the frame 10 and is led to the lower surface of the frame 10 and connected to a printed circuit board (not shown) attached to the lower surface of the frame 10.

Projections 43 are formed on both sides of the front portion of the supporting member 40. On the other hand, fixed cams 60 are disposed at the positions on both sides of the opening 13. Each of the fixed cams 60 has an upper horizontal cam surface 61 in the direction from the front to the rear, an inclined cam surface 62 which is backwardly downwardly slanted, and a lower horizontal cam surface 63. The projections 43 of the supporting member 40 come into contact with these cam surfaces.

The projections 43 adapted to come into contact with the cam surfaces are not necessarily provided for the supporting member 40. It is also possible to constitute such that both side portions of the supporting member 40 come into contact with the cam surfaces.

Referring now to Figs. 1 and 7, the opening 14 is formed in one side portion of the upper plate of the frame 10. An IC card fixing member 72 is enclosed in the opening 14. The fixing member 72 is fixed to one end of a leaf spring 71. The other end of the leaf spring 71 is inserted and fixed into a projection 24 formed on the frame 10. The fixing member 72 is downwardly urged by the leaf spring 71, thereby pressing the lower surface of the passageway 12. When the IC card 1 is inserted into the passageway 12, the front edge of the IC card 1 abuts on a slant surface 72a of the fixing member 72, so that the fixing member 72 is pushed up against the depressing force of the leaf spring 71. Thus, the fixing member 72 downwardly presses the upper surface of the IC card 1, thereby fixing the IC card 1 by the depressing force.

Referring to Figs. 1, 2, and 8, the hole 15 is formed in the upper plate in the rear portion of the frame 10 and a fixing member 73 is fitted into the hole 15 so as to be freely vertically movable in a manner similar to the above. One end of a leaf spring 74 made of conductive material is inserted into a projection 26 formed on the frame 10. The fixing member 73 is attached to the other end of the leaf spring 74. The fixing member 73 is downwardly pressed by the leaf spring 74. The fixing members 72 and 73 are formed of a soft material or an elastic material so as to prevent the damage or scratch of the IC card.

One end of a contact member 75 made of a spring member and also made of a conductive material is fixed by being pushed into a concave portion 27 of the frame 10. The other end of the contact member 75 extends over the fixing member 73. Although the contact member 75 is downwardly pressed, a part of the other end portion thereof abuts on a convex portion 25 formed on the frame 10, so that the height position of the other end portion is determined. When the IC card 1 is inserted and reached to the rear end portion in the passageway 12, the fixing member 73 is upwardly pushed by the amount of the thickness of the IC card 1. Then, a part of the other end portion of the leaf spring 74 comes into contact with a part of the other end portion of the contact member 75, so that the leaf spring 74 is electrically connected with the contact member 75. Namely, a sensor to detect the insertion of the IC card to a rear end position of the passageway 12 is constituted by the fixing member 73, leaf spring 74 and contact member 75.

The sensor to detect the insertion of the IC card or the state in which the IC card has been inserted to a predetermined position is not limited to the foregoing constitution. For example, the fixing member can be dispensed with and instead, the other end of the leaf spring 74 is curved and formed into a downward arc-like shape.

The whole operation will now be described with reference to Figs. 11 to 13.

In Fig. 11, at the standby position, the slide member 30 is returned to the front position by the force of the return spring 35 and is held at such a position that the receiving projecting portion 33 abuts on the front edge of the opening 16 or the front portion of the slide member 30 abuts on the front edge of the shoe portion 22 or opening 13. The rear end portion of the contact member supporting member 40 is also upwardly lifted by the force of the spring 35 and the supporting member 40 is held at such a position that the projection 43 abuts on the upper horizontal cam surfaces 61 of the fixed cams 60.

When the front edge of the inserted IC card 1 abuts on the receiving projecting portion 33 and the IC card 1 is further inserted, the slide member 30 moves backward and the supporting member 40 also together moves in the same direction. As shown in Fig. 12, the projections 43 of the supporting member 40 move from the horizontal cam surfaces 61 and are slided along the cam surfaces 62. Thus, the rear portion of the supporting member 40 descends and the supporting member 40 approaches the horizontal position. The contact portions 50a of the contact members 50 are come into contact with the corresponding contacts 2 of the IC card 1, respectively.

When the IC card 1 is further inserted in this state, as shown in Fig. 13, the projections 43 of the supporting member 40 move from the inclined cam surfaces 62 to the lower horizontal cam surfaces 63. The supporting member 40 is located in parallel with the IC card 1. The contact portions 50a strongly come into contact with the contacts 2, respectively. When the receiving projecting portion 33 abuts on the rear edge of the opening 16, the IC card 1 is completely inserted to a predetermined position.

As mentioned above, the fixing member 73 is pushed up by the inserted IC card 1 and the leaf spring 74 comes into contact with the contact member 75, so that the end of insertion of the IC card is detected. Since the IC card 1 is pressed by the pressing forces of the leaf springs 71 and 74 of the fixing members 72 and 73 and by the spring forces of the contact members 50, the IC card is fixed to the inserted position against the recovery force of the spring 35. Data is communicated between an electronic circuit in the IC card and an electronic circuit in the IC card reader by the electrical contacts between the contact members 50 and the contacts 2 in this state.

As will be understood from Figs. 11 to 13, the contact members 50 of the supporting member 40 are directly come into contact with the contacts 2 of the IC card 1 without sliding the surface of the IC card 1. Even if the IC card 1 is further moved, the supporting member 40 is also moved together with the movement of the IC card 1. Therefore, the contact members 50 are set to the predetermined position of the IC card 1 while keeping the contact relation with the contacts 2 and they do not relatively displace.

When the IC card 1 is pulled out, the slide member 30 and supporting member 40 and the like perform the operations opposite to the foregoing case by the force of the return spring 35 and are returned to the standby positions. In this case as well, the contact members 50 do not slide the surface of the IC card 1.

On the other hand, some of the IC cards have magnetic stripes on a part of the surface of each card. For example, the kind of IC card, ID code and the like are magnetically recorded on the magnetic stripe. In such an IC card, by arranging a magnetic head to the position where the magnetic stripe passes in association with the insertion of the IC card, data recorded on the magnetic stripe can be read or written.

As described above, the leaf spring 74 elastically downwardly pressing the IC card 1 via the fixing member 73 and fixes it, and at the same time, the leaf spring 74 comes into contact with the contact member 75 just over the leaf spring 74 by the upward displacement. Thus, an electric signal flows between both members 74 and 75 and is taken out as a detection signal of the IC card 1.

In this manner, the fixing member 75 and leaf spring 74 fixes the IC card 1 which has reached the predetermined position, thereby preventing the occurrence of a deviation between the contacts 2 and the contact members 50 due to the movement of the IC card 1 by the vibration or shock. Further, an IC card detection signal is generated by the cooperation with the contact member 75. Consequently, both of the fixing mechanism and the detection switching mechanism of the IC card 1 can be realized by a single mechanism using the spring members 74 and 75.

On the other hand, the contact member 75 downwardly pushes the spring 74 by the elastic force, thereby enabling the fixing force which acts on the IC card 1 to be further increased. The IC card can be strongly supported against the vibration and shock.

In the foregoing embodiment, the slide member 30 and supporting member 40 are returned by a single spring 35. However, as shown in Figs. 14 to 16, a return spring 81 of the slide member 30 and a return spring 82 of the supporting member 40 can be also individually attached. In these diagrams, the coil spring (tension spring) 81 is attached between a spring shoe 83 formed on the bearing portion 30a of the slide member 30 and a spring shoe 84 formed on the shoe portion 22 of the frame 10. The return spring 82 is the leaf spring. One end of the leaf spring 82 is fixed to the rear portion of the slide member 30 and the other end upwardly pushes the lower surface of the rear portion of the supporting member 40.

## Claims

1. An IC card reader comprising:
guide means, provided for a frame (10) of the IC card reader, for guiding an IC card (1) so as to be smoothly inserted in a passageway (12) and ejected;
a contact mechanism, having contact members (50), for bringing the contact members into contact with contacts (2) on the surface of the IC card, when the IC card is inserted in the passageway and reaches a predetermined position;
a card fixing mechanism including a first spring member (74), one end portion of which is fixed to the frame and the other end portion of which is urged onto the passageway by the spring elasticity, for depressing the IC card having reached the predetermined position;
said IC card reader is further provided with a card detection switching mechanism; characterized in that
both said card fixing mechanism and said card detection switching mechanism are constructed by said first spring member (74) made of a conductive material and a second spring member (75) made of a conductive material, one end portion of said second spring member being fixed to the frame and the other end portion of said second spring member being arranged over the other end portion of said first spring member, the other end portions of said first and second spring members coming into contact with each other to generate an IC card detection signal when the other end portion of said first spring member is pushed up by the IC card inserted into the predetermined position.

2. An IC card reader according to claim 1, wherein a fixing member (73) formed of a soft material or elastic material is attached to the other end portion of the first spring member.

3. An IC card reader according to claim 1, wherein the other end portion of the second spring member which is pressed to the passageway abuts on a convex portion (25) formed on the frame to be determined the height position thereof.

## Patentansprüche

1. IC-Kartenleser mit
für einen Rahmen (10) des IC-Kartenlesers vorgesehenen Führungsmitteln zum Führen einer IC-Karte (1) so, daß sie glatt in einen Durchgang (12) eingeführt und daraus ausgestoßen wird,
einem Kontaktelemente (50) aufweisenden Kontaktmechanismus zum Inberührungbringen der Kontaktelemente mit Kontakten (2) auf der Oberfläche der IC-Karte, wenn die IC-Karte in den Durchgang eingeführt ist und eine bestimmte Position erreicht,
einem Kartenfixiermechanismus, welcher ein erstes Federelement (74) enthält, dessen einer Endabschnitt am Rahmen befestigt und dessen anderer Endabschnitt durch die Federelastizität zum Durchgang belastet wird, zum Niederdrücken der IC-Karte, die die bestimmte Position erreicht hat,
wobei der IC-Kartenleser ferner mit einem Kartennachweisschaltmechanismus versehen ist, dadurch gekennzeichnet, daß
Kartenfixiermechanismus und Kartennachweisschaltmechanismus beide durch das erste Federelement (74), das aus einem leitfähigen Material besteht, und ein zweites Federelement (75), das aus einem leitfähigen Material besteht, aufgebaut sind, wobei ein Endabschnitt des zweiten Federelements am Rahmen befestigt ist und der andere Endabschnitt des zweiten Federelements über dem anderen Endabschnitt des ersten Federelements angeordnet ist, wobei die anderen Endabschnitte von erstem und zweitem Federelement miteinander in Berührung kommen und ein IC-Kartennachweissignal erzeugen, wenn der andere Endabschnitt des ersten Federelements durch die in die bestimmte Position eingeführte IC-Karte hochgedrückt wird.

2. IC-Kartenleser nach Anspruch 1, bei welchem ein aus einem weichen Material oder elastischen Material ausgebildetes Befestigungselement (73) am anderen Endabschnitt des ersten Federelements angebracht ist.

3. IC-Kartenleser nach Anspruch 1, bei welchem der andere Endabschnitt des zweiten Federelements, welcher zum Durchgang gedrückt wird, auf einem auf dem Rahmen ausgebildeten konvexen Abschnitt (25) zur Bestimmung der Höhenlage desselben zur Anlage kommt.

## Revendications

1. Lecteur de carte à circuit intégré comprenant :
- des moyens de guidage, prévus pour un châssis (10) d'un lecteur de carte à circuit intégré, pour guider une carte à circuit intégré (1) de sorte que celle-ci puisse être insérée doucement dans un passage (12) et éjectée,
- un mécanisme de contact, possédant des éléments de contact (50), adapté pour porter les éléments de contact en contact avec des contacts (2) sur la surface de la carte à circuit intégré, lorsque la carte à circuit intégré est insérée dans le passage et parvient dans une position prédéterminée,
- un mécanisme de fixation de carte comprenant un premier élément ressort (74), une partie d'extrémité de cet élément étant fixée au châssis et l'autre partie d'extrémité du premier élément ressort étant sollicitée dans le passage par l'élasticité du ressort, pour solliciter la carte à circuit intégré ayant atteint la position prédéterminée,
- le lecteur de carte à circuit intégré étant pourvu en outre d'un mécanisme interrupteur de détection de carte, caractérisé en ce que :
- le mécanisme de fixation de carte et le mécanisme interrupteur de détection de carte sont tous les deux constitués par le premier élément ressort (74) formé d'un matériau conducteur et par un second élément ressort (75) formé d'un matériau conducteur, une partie d'extrémité du second élément ressort étant fixée au châssis et l'autre partie d'extrémité du second élément ressort étant agencée sur l'autre partie d'extrémité dudit premier élément ressort, les autres parties d'extrémité du premier et du second éléments ressorts venant en contact mutuel pour générer un signal de détection de carte à circuit intégré, lorsque l'autre partie d'extrémité dudit premier élément ressort est soulevée par la carte de circuit intégré insérée dans la position prédéterminée.

2. Lecteur de carte à circuit intégré selon la revendication 1, dans lequel un élément de fixation (73) formé d'un matériau mou ou d'un matériau élastique est attaché à l'autre partie d'extrémité du premier élément ressort.

3. Lecteur de carte à circuit intégré selon la revendication 1, dans lequel l'autre partie d'extrémité du second élément ressort qui est sollicitée dans le passage prend appui sur une partie convexe (25) formée sur le châssis pour déterminer sa position en hauteur.
